# EUROPEAN PATENT SPECIFICATION

(11) **EP 1 564 040 B1**
(45) Date of publication and mention of the grant of the patent: **28.03.2012**
(21) Application number: 05000606.3
(22) Date of filing: 13.01.2005
(51) Int. Cl.: B60G 17/06, B60G 17/08, B62K 25/10

(54) **Shock absorber with adjustable damping force**
Stossdämpfer mit einstellbarer Dämpfkraft
Amortisseur de chocs à force d'amortissement réglable

(30) Priority: 19.01.2004 JP 2004010192
(43) Date of publication of application: 17.08.2005
(73) Proprietor: Yamaha Hatsudoki Kabushiki Kaisha, Iwata-shi, Shizuoka-ken (JP)
(72) Inventor: Inaba, Kazumi, Iwata-shi Shizuoka-ken (JP); Terui, Toshiyasu, Iwata-shi Shizuoka-ken (JP); Fukuda, Hiromi, Iwata-shi Shizuoka-ken (JP)
(74) Representative: Grünecker, Kinkeldey, Stockmair & Schwanhäusser

(56) References cited:
- EP-A- 0 556 055
- US-A- 4 948 163
- US-B1- 6 360 148

## Description

The invention relates to a suspension system for a vehicle, in particular for a motorcycle, comprising a shock absorber which provides an adjustable extension damping force, and a damping force controller. Further, the invention relates to a vehicle, in particular a 3-wheeler, 4-wheeler, or snow-mobile, or a motorcycle, preferably of the motocross type, comprising a main frame and a wheel swingably connected to the main frame via a shock absorber.

Such a suspension system is known, e.g., from JP-Y-Hei 06-029191. Therein, a shock absorber which is adapted to regulate the damping force is proposed for the purpose of preventing the vehicle body tail from sinking at the time of starting up and abrupt acceleration. It is adapted to calculate an acceleration factor from the gear position and the vehicle speed, predict the amount of the tail sinking from the acceleration factor and a throttle opening speed, and to control the damping force of the shock absorber according to the predicted amount.

Oppositely thereto, a sportive vehicle, such as, e.g., a motorcycle for the motocross race, constantly runs on cross-country racecourses in such a manner as climbing uphill followed by jumping over large undulations in succession and running steep downhill. This type of motorcycle is required to be capable of jumping high when needed in a stabilized attitude and running a steep downhill in a stabilized manner while restricting the rear wheel from bouncing. However, because the damping force controller of the prior art cited above is not intended for such a ride as described above, it cannot meet the above requirements.

US 4948163 discloses a suspension system for vehicles with a damping force controller to determine a running state of the vehicle and which automatically regulates the extension damping force according to the determined running state.

Therefore, it is an object of the invention to provide an improved suspension system that enables the vehicle, in particular the motorcycle, to jump high when needed in a stabilized attitude and run a steep downhill in a stabilized running attitude while restricting the rear wheel from bouncing.

It is further an object of the invention to provide an improved vehicle being drivable in a more secure and stabilized manner.

For a suspension system of the above kind, this object is solved in an inventive manner in that the damping force controller is configured to determine a downhill running state and/or a jumping start state as a particular running state of the vehicle, and further to automatically regulate the extension damping force according to the determined running state of the vehicle.

Preferably, the damping force controller is configured to regulate the extension damping force at a jumping start state to be smaller than an extension damping force during a normal running state of the vehicle.

Further, preferably the damping force controller is configured to regulate the extension damping force at a downhill running state to be greater than an extension damping force during a normal running state of the vehicle.

Additionally, or alternatively, a suspension system is provided, wherein the damping force controller is configured to regulate the extension damping force according to a throttle position or throttle closing speed and/or a brake application signal.

According to a preferred embodiment, the damping force controller is configured to regulate the extension damping force to be smaller than an extension damping force for a normal running state of the vehicle, when a throttle position is determined to be smaller than a reference position or when a throttle closing speed is determined to be equal to or greater than a reference closing speed, and no brake application signal is determined.

Further, preferably the damping force controller is configured to regulate the extension damping force to be greater than an extension damping force for a normal running state of the vehicle, when a throttle position is determined to be smaller than a reference position or when a throttle closing speed is determined to be equal to or greater than a reference closing speed, and a brake application signal is determined.

Moreover, preferably a normal running state is defined as a state at which the vehicle is thought to run on a level surface, in particular wherein a throttle valve is set to be in a region near to a fully wide open position.

Also, preferably a jumping start state is defined as a state at which the vehicle is thought to be in a state of beginning to jump off a surface, in particular wherein a throttle valve position is set to be in a region near to a fully closed position or wherein a throttle closing speed is greater than or equal to a reference closing speed, and wherein a brake is not applied.

According to a preferred embodiment, the downhill running state is defined as a state at which the vehicle is thought to run on a downwardly tilted surface, in particular wherein a throttle valve position is set to be in a region of near to a fully closed position or wherein a throttle closing speed is greater than or equal to a reference closing speed, and wherein a brake is applied.

According to a further preferred embodiment, the shock absorber is positioned in connection with a suspension unit of a drive wheel, in particular being a rear drive wheel and/or in that the shock absorber comprises a damping force control valve, in particular situated in a piston and/or continuously adjustable by a linear solenoid which is controllable by the damping force controller.

Besides, for a vehicle of the above kind, the above object is solved in an inventive manner in that a suspension system according to at least one of the claims 1 to 10 is provided for automatically regulating an extension damping force according to a running state of the vehicle.

According to an embodiment of the invention as described above, the suspension system is adapted to reduce the extension damping force of the rear wheel shock absorber when the vehicle begins to jump. Accordingly the rear wheel shock absorber is forced to extend long so that the vehicle can jump high in a stabilized attitude without a rider being required of high degree of maneuver technique.

According to another embodiment of the invention, the suspension system is adapted to increase the extension damping force of the rear wheel shock absorber when the motorcycle runs downhill. Therefore, the rear wheel shock absorber is restricted from extending and accordingly the rear wheel is restricted from bouncing so that downhill run is possible in a stabilized attitude without a rider being required of high degree of maneuver technique.

According to a further embodiment of the invention, the suspension system is adapted to regulate the extension damping force according to the throttle position or throttle closing speed and a brake application signal. Therefore, the state of the vehicle, beginning to jump or running downhill, is determined easily and securely.

In particular, according to a preferred embodiment, the suspension system is adapted to determine the state of beginning to jump when the throttle position is smaller than a reference position or the throttle closing speed is greater than a reference closing speed and no brake application signal is given, and to reduce the extension damping force of the rear wheel shock absorber. Therefore, the state of the vehicle, beginning to jump, is determined easily and securely, so that the vehicle can jump high in a stabilized attitude.

Moreover, according to a further preferred embodiment, the suspension system is adapted to determine that the vehicle is running downhill when the throttle position is smaller than a reference position or the throttle closing speed is greater than a reference closing speed and a brake application signal is given, and the extension damping force of the rear wheel shock absorber is made greater than the extension damping force for the normal run of the motorcycle. Therefore, a downhill run state of the vehicle is determined easily and securely and it is possible to restrict the rear wheel from bouncing, and stabilize running attitude.

Further preferred embodiments are subject to the respective subclaims.

In the following, the invention will be described in greater detail by means of a preferred embodiment with reference to the appended drawings, wherein:
- Fig. 1: shows a block constitution of a damping force controller as an embodiment of the invention;
- Fig. 2: is a flowchart for explaining the function of the damping force controller;
- Fig. 3: is a simplified side view of a motorcycle provided with the above damping force controller; and
- Fig. 4: is a conceptual view of the damping force controller.

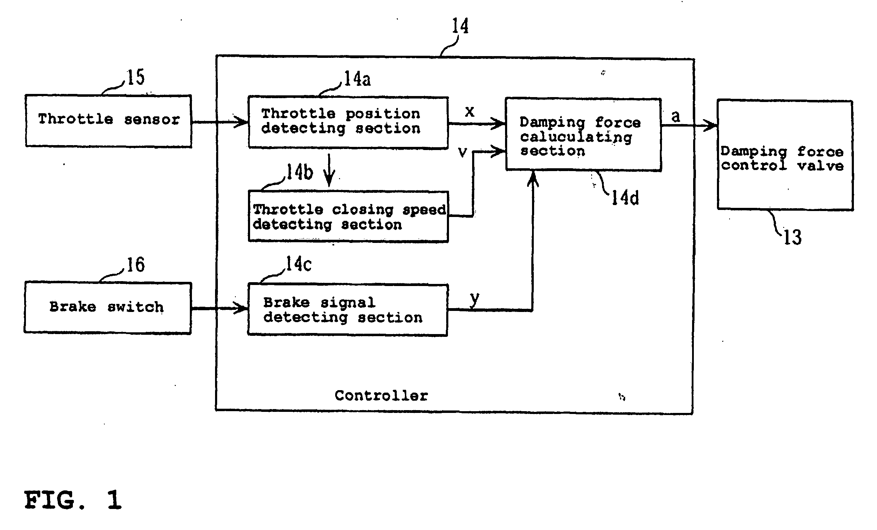

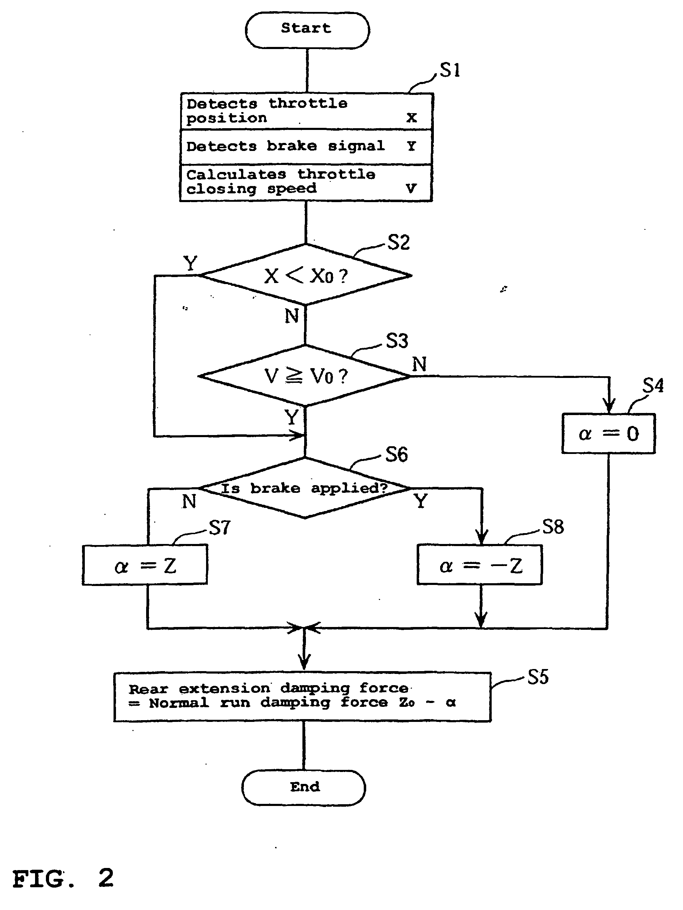

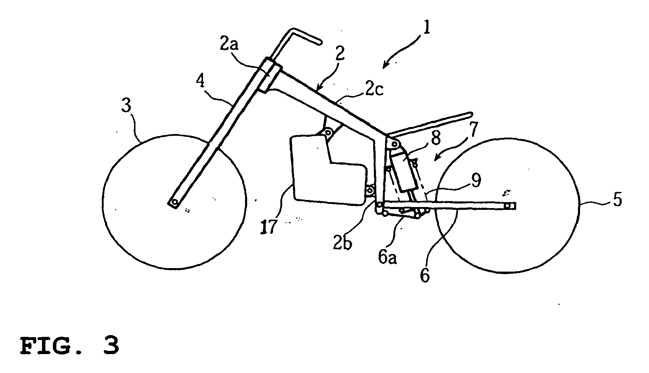

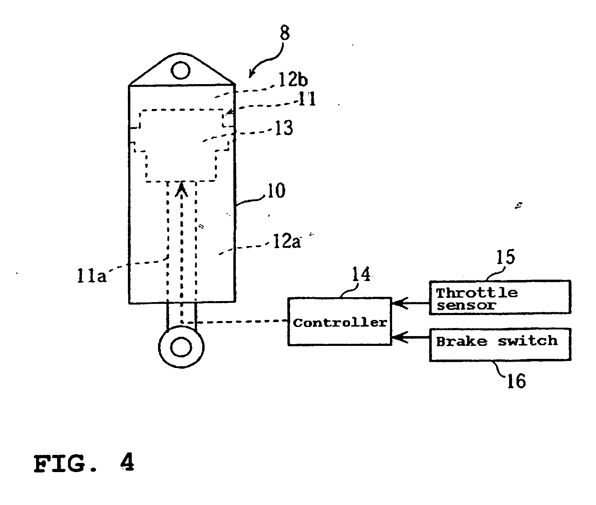

Figs. 1 to 4 are for explaining a damping force controller of a motorcycle shock absorber as an embodiment of the invention. Fig. 1 shows a block constitution. Fig. 2 is a flowchart. Fig. 3 is a simplified side view of a motorcycle. Fig. 4 is a conceptual view of the shock absorber.

In the drawings, a motorcycle 1 is provided with a device of this embodiment. In rough description, the motorcycle 1 comprises: a vehicle body frame 2 with its head pipe 2a rotatably supporting a front fork 4 to be steered to right and left with its lower end rotatably supporting a front wheel 3; a rear arm 6 with its rear end rotatably supporting a rear wheel 5 to swing up and down about a pivot on a rear arm bracket 2b; and an engine unit 17 suspended from a main frame 2c.

A rear wheel suspension unit 7 is stretched between the upper part of the rear arm bracket 2b and the rear arm 6 along the vehicle center line. The rear wheel suspension unit 7 comprises a damping force variable control type of shock absorber 8 and a coil spring 9 surrounding the shock absorber 8.

The shock absorber 8 is of a type with a piston 11 inserted for free sliding within a cylinder 10. The interior of the cylinder 10 is defined into an extension side oil chamber 12a in which oil pressure increases in the extension stroke and a contraction side oil chamber 12b in which oil pressure increases in the contraction stroke. The lower end of a piston rod 11 a connected to the piston 11 is connected through a linkage 6a to the rear arm 6. The upper end of the cylinder 10 is connected to the upper part of the rear arm bracket 2b.

The piston 11 is provided with a built-in damping force control valve 13 for regulating the damping force produced by the relative motion of the piston 11. The damping force control valve 13 is of a type that regulates the cross-sectional area of the passage for introducing working oil in the extension side oil chamber 12a into the contraction side oil chamber 12b by means of a linear solenoid, and is adapted that the extension damping force decreases as the passage cross-sectional area increases, and vice versa.

As for the motorcycle 1 of this embodiment, when the rear wheel 5 passes over a bump for example, the rear arm 6 swings up. The impact force produced by the upswing is absorbed by the contraction of the coil spring 9. When the shock absorber 8 contracts, working oil in the contraction side oil chamber 12b flows into the extension side oil chamber 12a through an orifice in the piston 13 to produce a contraction damping force, which also absorbs the impact force.

On the other hand, when the shock absorber 8 is extended by the resilient force of the coil spring 9, moving from the contraction stroke onto the extension stroke, working oil in the extension side oil chamber 12a flows into the contraction side oil chamber 12b to produce an extension damping force. This embodiment is adapted that the extension damping force is regulated by regulating the passage area for the working oil by means of the damping force control valve 13. When the extension damping force decreases, the shock absorber 8 is forced to extend long with the resilient force of the coil spring 9. In contrast, when the extension damping force increases, the shock absorber 8 becomes less easy to extend. Of course, the term extension damping force is not to be understood as limiting for an extending movement of the shock absorber, but is likewise to be understood for retracting or decreasing movements of the shock absorber.

The motorcycle 1 of this embodiment is also provided with a controller 14 for regulating the damping force produced with the damping force control valve 13 to a specified value according to the running state of the vehicle. A signal from a throttle sensor 15 for detecting the throttle valve position (opening) of the throttle valve for regulating the intake passage area, and a signal from a brake switch 16 for detecting whether or not the brake pedal is depressed, are inputted to the controller 14.

The controller 14 comprises: a throttle position calculating section 14a for determining the throttle position (opening) x from the signal coming from the throttle sensor 15; a throttle speed calculating section 14b for determining the throttle closing speed v; a brake signal detecting section 14c for determining from the signal coming from the brake switch 16 whether or not the brake is being applied; and a damping force calculating section 14d for calculating a necessary damping force (a) on the basis of the above throttle position (opening) x, the above throttle closing speed v, and the brake signal y and outputting a damping force signal (a) to the damping force control valve 13.

The controller 14 controls the damping force control valve 13 so that the extension damping force of the rear wheel shock absorber 8 when the motorcycle begins to jump is smaller than the extension damping force for the normal run of the motorcycle and also controls the damping force control valve 13 so that the extension damping force of the rear wheel shock absorber 8 when the motorcycle runs a steep downhill is equal to or slightly greater than the extension damping force for the normal run of the motorcycle. Incidentally, the term "normal run" as used for this embodiment means the run on a flat road, neither uphill nor downhill, with the throttle valve opening relatively wide (in the vicinity of fully wide open).

Here in this embodiment, the vehicle is determined to be in the state of beginning to jump when the throttle position (opening) x is not greater than a reference position (nearly fully closed) or the throttle closing speed v is not less than a reference closing speed, and that the brake is not applied. When the throttle position (opening) x is not greater than a reference position (nearly fully closed) or the throttle closing speed v is not less than a reference closing speed, and that the brake is applied, the vehicle is determined to be in the state of running on a steep downhill.

This embodiment is constituted that: the vehicle is determined to be in the state of beginning to jump when the throttle position (opening) x is not greater than a reference position (nearly fully closed) or the throttle closing speed v is not less than a reference closing speed, and the brake is not being applied; and the vehicle is determined to be in the state of running on a steep downhill when the brake is being applied. The above constitution makes it possible to determine easily and securely the moment at which the vehicle is beginning to jump or running downhill.

The operation of this embodiment is described according to the flowchart of Fig. 2. When the throttle position x, the brake signal y, and the throttle closing speed v are calculated (step S1) and result in that the throttle position x is not smaller than a reference position x₀, and the throttle closing speed v is not greater than or equal to a reference closing speed v₀ (steps S2 and S3), a damping force compensation value is determined to be α=0 (step S4), and the extension damping force of the rear wheel shock absorber 8 is controlled to be (normal run damping force z₀ - 0) (step S5).

On the other hand, when the throttle position (opening) x is smaller than the reference position x₀ (nearly fully closed) in the above step S2, or the throttle closing speed v is not less than the reference closing speed v₀ in the step S3, and the brake is not being applied (step S6), the vehicle is determined to be in the state of beginning to jump and the damping force compensation value α is determined to be z (step S7), and the extension damping force of the rear wheel shock absorber 8 is controlled to be (normal run damping force z₀ - z) (step S5). As a result, the rear wheel shock absorber 8, with its decreased extension damping force, can extend easily, and the vehicle can jump high in a stabilized attitude.

When the above step S6 results in that the brake is being applied, the vehicle is determined to be in the state of running on a steep downhill and the damping force compensation value α is determined to be -z (step S8), and the extension damping force of the rear wheel shock absorber 8 is controlled to be (normal run damping force z₀ + z) (step S5). As a result, the rear wheel shock absorber 8, with its increased extension damping force, extends less easily, so that the real wheel is restricted from bouncing and the vehicle can run in a stabilized attitude.

According to this embodiment as described above, the extension damping force of the rear wheel shock absorber 8 is reduced when the vehicle begins to jump, the rear wheel shock absorber 8 is forced to extend accordingly long, and the vehicle can jump high in a stabilized attitude without the rider being required of high degree of maneuver technique.

When the vehicle runs downhill, the rear wheel shock absorber 8, with its extension damping force increased, is restricted from extending, and the rear wheel 5 is restricted accordingly from bouncing, and running attitude is stabilized without the rider being required of high degree of maneuver technique.

As described, the invention provides a suspension system including a damping force controller of a vehicle shock absorber that enables the vehicle, in particular the motorcycle, the 3-wheeler, 4-wheeler, and/or snow mobile, to jump high when needed in a stabilized attitude and run a steep downhill in a stabilized running attitude while restricting the rear wheel from bouncing.

In particular, the above description discloses a damping force controller of a shock absorber for a motorcycle adapted to regulate the damping force, in which the extension damping force of the rear wheel shock absorber when the motorcycle begins to jump is controlled to be smaller than the extension damping force for the normal run of the motorcycle, and/or a damping force controller of a shock absorber for a motorcycle adapted to regulate the damping force, in which the extension damping force of the rear wheel shock absorber when the motorcycle runs downhill is controlled to be greater than the extension damping force for the normal run of the motorcycle, and/or a damping force controller of a shock absorber for a motorcycle adapted to regulate the damping force, in which the extension damping force is regulated according to the throttle position or throttle closing speed and a brake application signal.

Therein, preferably the extension damping force of the rear wheel shock absorber is controlled to be smaller than the extension damping force for the normal run of the motorcycle when the throttle position is smaller than a reference position or the throttle closing speed is greater than a reference closing speed and no brake application signal is given.

Further, preferably the extension damping force of the rear wheel shock absorber is controlled to be greater than the extension damping force for the normal run of the motorcycle when the throttle position is smaller than a reference position or the throttle closing speed is greater than a reference closing speed and a brake application signal is given.

As described above, in order to provide a damping force controller of a motorcycle shock absorber that enables the motorcycle to jump high when needed in a stabilized attitude and to run downhill in a stabilized manner while restricting the rear wheel from bouncing, a damping force controller of a motorcycle shock absorber is provided adapted to regulate the damping force, wherein the extension damping force of the rear wheel shock absorber at the moment at which the vehicle is beginning to jump is regulated to be smaller than the extension damping force for a normal run.

## Claims

1. Suspension system for a vehicle, in particular for a motorcycle, comprising: a shock absorber (8) which provides an adjustable extension damping force, and a damping force controller (14), wherein the damping force controller (14) is configured to determine a downhill running state and/or a jumping start state as a particular running state of the vehicle, and further to automatically regulate the extension damping force according to the determined running state of the vehicle **characterized in that** the damping force controller (14) is configured to regulate the extension damping force at a jumping start state to be smaller than an extension damping force during a normal running state of the vehicle, and a jumping start state is defined as a state at which the vehicle is thought to be in a state of beginning to jump off a surface, wherein a throttle valve position is set to be in a region near to a fully closed position or wherein a throttle closing speed is greater than or equal to a reference closing speed, and wherein a brake is not applied.

2. Suspension system according to claim 1, **characterized in that** a normal running state is defined as a state at which the vehicle is thought to run on a level surface, in particular wherein a throttle valve is set to be in a region near to a fully wide open position.

3. Suspension system according to claim 1 or 2, **characterized in that** the damping force controller (14) is configured to regulate the extension damping force at a downhill running state to be greater than an extension damping force during a normal running state of the vehicle, in particular according to the throttle position or throttle closing speed and/or a brake application signal.

4. Suspension system according to at least one of the claims 1 to 3, **characterized in that** the damping force controller (14) is configured to regulate the extension damping force to be smaller than an extension damping force for a normal running state of the vehicle, when a throttle position (X) is determined to be smaller than a reference position (X₀) or when a throttle closing speed (V) is determined to be equal to or greater than a reference closing speed (V₀), and no brake application signal is determined.

5. Suspension system according to at least one of the claims 1 to 4, **characterized in that** the damping force controller (14) is configured to regulate the extension damping force to be greater than an extension damping force for a normal running state of the vehicle, when a throttle position (X) is determined to be smaller than a reference position (X₀) or when a throttle closing speed (V) is determined to be equal to or greater than a reference closing speed (V₀), and a brake application signal is determined.

6. Suspension system according to at least one of the claims 1 to 5, **characterized in that** the downhill running state is defined as a state at which the vehicle is thought to run on a downwardly tilted surface, in particular wherein a throttle valve position is set to be in a region of near to a fully closed position or wherein a throttle closing speed is greater than or equal to a reference closing speed, and wherein a brake is applied.

7. Suspension system according to at least one of the claims 1 to 6, **characterized in that** the shock absorber (8) is positioned in connection with a suspension unit (6) of a drive wheel (5), in particular being a rear drive wheel and/or **in that** the shock absorber (8) comprises a damping force control valve (13), in particular situated in a piston (11) and/or continuously adjustable by a linear solenoid which is controllable by the damping force controller (14).

8. Vehicle, in particular a 3-wheeler, 4-wheeler, or snow-mobile, or a motorcycle, preferably of the motocross type, comprising a main frame (2) and a wheel (5) swingably connected to the main frame (2) via a shock absorber (8), **characterized in that** a suspension system (7) according to at least one of the claims 1 to 7 is provided for automatically regulating an extension damping force according to a running state of the vehicle.

## Patentansprüche

1. Aufhängungssystem für ein Fahrzeug, insbesondere für ein Motorrad, aufweisend einen Stoßdämpfer (8), der eine einstellbare Ausdehnungs- Dämpfungskraft schafft, und eine Dämpfungskraftsteuerung (14), wobei die Dämpfungskraftsteuerung (14) konfiguriert ist, einen Zustand beim Bergabfahren und /oder einen Sprung- Startzustand als einen besonderen Fahrzustand des Fahrzeuges festzustellen, und außerdem die Dämpfungskraft entsprechend des festgestellten Fahrzustandes des Fahrzeuges automatisch zu regeln, **dadurch gekennzeichnet, dass** die Dämpfungskraftsteuerung (14) konfiguriert ist, die Ausdehnungs-Dämpfungskraft bei einem Sprung- Startzustand zu regeln, um kleiner als eine Ausdehnungs- Dämpfungskraft während eines normalen Fahrzustandes des Fahrzeuges zu sein, und wobei ein Sprung- Startzustand als ein Zustand definiert ist, bei dem das Fahrzeug gedacht ist, in einem Zustand des Beginnens zu sein, um von einer Oberfläche weg zu springen, wobei eine Drosselventilposition festgelegt ist, um in einem Bereich nahe einer vollständig geschlossenen Position zu sein, oder wobei eine Drosselschließgeschwindigkeit größer als oder gleich zu einer Referenzschließgeschwindigkeit ist, und wobei keine Bremse angewendet wird.

2. Aufhängungssystem nach Anspruch 1, **dadurch gekennzeichnet, dass** ein normaler Fahrzustand als ein Zustand definiert ist, bei dem das Fahrzeug gedacht ist, auf einer Niveauoberfläche zu fahren, insbesondere wobei ein Drosselventil festgelegt ist, in einem Bereich nahe zu einer vollständig weit offenen Position zu sein.

3. Aufhängungssystem nach Anspruch 1 oder 2, **dadurch gekennzeichnet, dass** die Dämpfungskraftsteuerung (14) konfiguriert ist, die Ausdehnungs- Dämpfungskraft bei einem Zustand beim Bergabfahren zu regeln, um größer als eine Ausdehnungs- Dämpfungskraft während eines normalen Fahrzustandes des Fahrzeuges zu sein, insbesondere entsprechend der Drosselposition oder Drosselschließgeschwindigkeit und / oder eines Bremsanwendurigssignales.

4. Aufhängungssystem nach zumindest einem der Ansprüche 1 bis 3, **dadurch gekennzeichnet, dass** die Dämpfungskraftsteuerung (14) konfiguriert ist, die Ausdehnungs- Dämpfungskraft zu regeln, um kleiner als eine Ausdehnungs- Dämpfungskraft für einen normalen Fahrzustand des Fahrzeuges zu sein, wenn eine Drosselposition (X) festgelegt ist, kleiner als eine Referenzposition (X₀) zu sein, oder wenn eine Drosselschließgeschwindigkeit (V) festgelegt ist, gleich zu oder größer als eine Referenzschließgeschwindigkeit (V₀) zu sein, und kein Bremsanwendungssignal bestimmt wird.

5. Aufhängungssystem nach zumindest einem der Ansprüche 1 bis 4, **dadurch gekennzeichnet, dass** die Dämpfungskraftsteuerung (14) konfiguriert ist, die Ausdehnungs- Dämpfungskraft zu regeln, um größer als eine Ausdehnungs- Dämpfungskraft für einen normalen Fahrzustand des Fahrzeuges zu sein, wenn eine Drosselposition (X) festgelegt ist, kleiner als eine Referenzposition (X₀) zu sein, oder wenn eine Drosselschließgeschwindigkeit (V) festgelegt ist, gleich zu oder größer als eine Referenzschließgeschwindigkeit (V₀) zu sein, und ein Bremsanwendungssignal bestimmt wird.

6. Aufhängungssystem nach zumindest einem der Ansprüche 1 bis 5, **dadurch gekennzeichnet, dass** der Zustand beim Bergabfahren als ein Zustand definiert ist, bei dem das Fahrzeug gedacht ist, auf einer bergab geneigten Oberfläche zu fahren, insbesondere wobei eine Drosselventilposition festgelegt ist, in einem Bereich nahe zu einer vollständig geschlossenen Position zu sein, oder wobei die Drosselschließgeschwindigkeit größer oder gleich zu einer Referenzschließgeschwindigkeit ist, und wobei eine Bremse angewendet wird.

7. Aufhängungssystem nach zumindest einem der Ansprüche 1 bis 6, **dadurch gekennzeichnet, dass** der Stoßdämpfer (8) in Verbindung mit einer Aufhängungseinheit (6) eines Antriebsrades (5) positioniert ist, das insbesondere ein hinteres Antriebsrad ist und / oder **dadurch**, dass der Stoßdämpfer (8) ein Dämpfungskraft- Steuerventil (13) aufweist, insbesondere in einem Kolben (119 angeordnet, und / oder durch ein Magnetventil, das durch die Dämpfungskraftsteuerung (14) steuerbar ist, stufenlos einstellbar.

8. Fahrzeug, insbesondere ein Dreirad- Fahrzeug, Vierrad- Fahrzeug, ein Schneemobil, oder ein Motorrad, vorzugsweise von dem Motocross- Typ, aufweisend einen Hauptrahmen (2) und ein Rad (5), schwingbar mit dem Hauptrahmen (2) über einen Stoßdämpfer (8) verbunden, **dadurch gekennzeichnet, dass** ein Aufhängungssystem (7) nach zumindest einem von den Ansprüchen 1 bis 7 für ein automatisches Regeln einer Ausdehnungs- Dämpfungskraft entsprechend eines Fahrzustand des Fahrzeuges vorgesehen ist.

## Revendications

1. Système de suspension pour un véhicule, en particulier pour un motocycle, comprenant : un amortisseur (8) qui fournit une force d'amortissement d'extension réglable, et un élément de commande de force d'amortissement (14), étant précisé que l'élément de commande de force d'amortissement (14) est conçu pour déterminer un état de circulation de descente et/ou un état de début de saut comme état de circulation particulier du véhicule, et également pour réguler automatiquement la force d'amortissement d'extension selon l'état de circulation déterminé du véhicule, **caractérisé en ce que** l'élément de commande de force d'amortissement (14) est conçu pour réguler la force d'amortissement d'extension dans un état de début de saut pour qu'elle soit inférieure à une force d'amortissement d'extension pendant un état de circulation normal du véhicule, et un état de début de saut est défini comme un état dans lequel le véhicule est censé être dans un état où il commence à sauter d'une surface, étant précisé qu'une position du papillon des gaz est réglée pour être dans une zone proche d'une position complètement fermée, ou qu'une vitesse de fermeture de papillon des gaz est supérieure ou égale à une vitesse de fermeture de référence, et qu'un frein n'est pas appliqué.

2. Système de suspension selon la revendication 1, **caractérisé en ce qu'**un état de circulation normal est défini comme un état dans lequel le véhicule est censé circuler sur une surface plate, étant précisé en particulier qu'un papillon des gaz est réglé pour être dans une zone proche d'une position complètement ouverte.

3. Système de suspension selon la revendication 1 ou 2, **caractérisé en ce que** l'élément de commande de force d'amortissement (14) est conçu pour réguler la force d'amortissement d'extension dans un état de circulation de descente pour qu'elle soit supérieure à une force d'amortissement d'extension pendant un état de circulation normal du véhicule, en particulier suivant la position du papillon ou la vitesse de fermeture du papillon et/ou un signal d'application de frein.

4. Système de suspension selon l'une au moins des revendications 1 à 3, **caractérisé en ce que** l'élément de commande de force d'amortissement (14) est conçu pour réguler la force d'amortissement d'extension pour qu'elle soit inférieure à une force d'amortissement d'extension pour un état de circulation normal du véhicule, quand une position de papillon (X) est déterminée pour être inférieure à une position de référence (X₀) ou quand une vitesse de fermeture de papillon (V) est déterminée pour être égale ou supérieure à une vitesse de fermeture de référence (Vₒ) et qu'aucun signal d'application de frein est déterminé.

5. Système de suspension selon l'une au moins des revendications 1 à 4, **caractérisé en ce que** l'élément de commande de force d'amortissement (14) est conçu pour réguler la force d'amortissement d'extension pour qu'elle soit supérieure à une force d'amortissement d'extension pour un état de circulation normal du véhicule, quand une une position de papillon (X) est déterminée pour être inférieure à une position de référence (Xₒ) ou quand une vitesse de fermeture de papillon (V) est déterminée pour être égale ou supérieure à une vitesse de fermeture de référence (Vₒ) et qu'un signal d'application de frein est déterminé.

6. Système de suspension selon l'une au moins des revendications 1 à 5, **caractérisé en ce que** l'état de circulation de descente est défini comme un état dans lequel le véhicule est censé circuler sur une surface inclinée vers le bas, étant précisé en particulier qu'une position de papillon est réglée pour être dans une zone proche d'une position complètement fermée ou qu'une vitesse de fermeture de papillon est supérieure ou égale à une vitesse de fermeture de référence, et qu'un frein est appliqué.

7. Système de suspension selon l'une au moins des revendications 1 à 6, **caractérisé en ce que** l'amortisseur (8) est positionné en liaison avec une unité de suspension (6) d'une roue motrice (5), en particulier une roue motrice arrière, et/ou l'amortisseur (8) comprend une soupape de commande de force d'amortissement (13), située en particulier dans un piston (11) et/ou réglable de manière continue par un solénoïde linéaire qui est apte à être commandé par l'élément de commande de force d'amortissement (14).

8. Véhicule, en particulier à 3 roues, à 4 roues, ou une motoneige ou un motocycle, de préférence du type motocross, comprenant un cadre principal (2) et une roue (5) reliée de manière oscillante au cadre principal (2) par l'intermédiaire d'un amortisseur (8), **caractérisé en ce qu'**un système de suspension (7) selon l'une au moins des revendications 1 à 7 est prévu pour réguler automatiquement une force d'amortissement d'extension suivant un état de circulation du véhicule.
